# FASCICULE DE BREVET EUROPEEN

(11) **EP 3 298 748 B1**
(45) Date de publication et mention de la délivrance du brevet: **01.09.2021**
(21) Numéro de dépôt: 16727764.9
(22) Date de dépôt: 12.05.2016
(51) Int. Cl.: H04L 29/06, H04W 92/02

(54) **PROCEDE ET DISPOSITIF DE TRAITEMENT D'UN MESSAGE DE SIGNALISATION RELATIF A UN SERVICE DE COMMUNICATION D'UN EQUIPEMENT CLIENT**
VERFAHREN UND VORRICHTUNG ZUR VERARBEITUNG EINER SIGNALISIERUNGSNACHRICHT IM ZUSAMMENHANG MIT EINEM KOMMUNIKATIONSDIENST EINER CLIENT-VORRICHTUNG
METHOD AND DEVICE FOR PROCESSING A SIGNALING MESSAGE RELATED TO A COMMUNICATION SERVICE OF A CLIENT DEVICE

(30) Priorité: 22.05.2015 FR 1554631
(43) Date de publication de la demande: 28.03.2018
(73) Titulaire: ORANGE, 92130 Issy-les-Moulineaux (FR)
(72) Inventeur: BOUVET, Bertrand, 22700 Perros Guirec (FR)
(86) Numéro de dépôt international: PCT/FR2016/051129
(87) Numéro de publication internationale: WO 2016/189218

(56) Documents cités:
- WO-A1-2009/087186
- WO-A2-2009/117413
- WO-A2-2010/055012
- US-A1- 2004 204 095
- "3rd Generation Partnership Project; Technical Specification Group Services and System Aspects; IP Multimedia Subsystem (IMS) centralized services; Stage 2 (Release 12)", 3GPP STANDARD; 3GPP TS 23.292, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.5.0, 19 décembre 2014 (2014-12-19), pages 1-120, XP050927229, cité dans la demande

## Description

L'invention concerne le domaine des réseaux de communications et plus particulièrement un procédé, un commutateur et un programme d'ordinateur pour le traitement de messages de signalisation d'équipements clients au sein d'un réseau de communication.

Les services de communication peuvent aujourd'hui être fournis à un équipement client via un réseau de communication fonctionnant en mode paquet (PS pour Packet Switch en anglais) ou via un réseau de communication fonctionnant en mode circuit (CS pour Circuit Switch en anglais) selon le type d'accès au réseau de communication de l'équipement client.

Lorsque l'équipement client est connecté à un réseau d'accès de type 4G, par exemple LTE (pour Long Term Evolution en anglais) associé à un sous-système IMS (pour IP-Internet Protocol-Multimedia Subsystem en anglais) c'est-à-dire un cœur de réseau présentant une architecture de réseau IMS telle qu'introduite par l'organisme de normalisation 3GPP (« *3^{rd} Generation Partnership Project* ») pour les réseaux mobiles, il est nécessaire que cet équipement client s'enregistre auprès du sous-système IMS afin de bénéficier des services de communication.

L'architecture de réseau IMS permet notamment l'établissement dynamique et le contrôle de sessions multimédia entre deux clients ainsi que la réservation des ressources au niveau du réseau d'accès des flux multimédias. Grâce à cette architecture, les opérateurs réseau peuvent commodément mettre en œuvre une politique de gestion, fournir une Qualité de Service prédéterminée, et calculer les montants à facturer aux clients. L'architecture IMS permet actuellement d'accéder à des services de type téléphonie, visiophonie, SMS (pour Short Message Service en anglais), Présence et Messagerie Instantanée, dont elle gère aussi l'interaction.

Une telle architecture de réseau IMS comprend notamment :
- un ou plusieurs serveurs d'enregistrement, appelés « S-CSCF » (pour Serving-Call Server Control Function) aptes (entre autres fonctions) à gérer la procédure d'enregistrement des dispositifs connectés au réseau ;
- un ou plusieurs serveurs d'interrogation, appelés « I-CSCF » (pour Interrogating-Call Server Control Function) et d'ailleurs souvent combinés physiquement avec les serveurs de type S-CSCF pour constituer des serveurs dénotés « I/S-CSCF », qui, au moment de l'enregistrement d'un équipement client, interrogent un serveur d'abonnés appelé « HSS » (pour Home Subscriber Server), afin de pouvoir sélectionner un serveur S-CSCF possédant les caractéristiques requises pour atteindre le niveau de service souscrit par l'utilisateur ;
- un ou plusieurs serveurs HSS, contenant chacun une base de données-clients. Chaque serveur HSS contient le « profil » d'un certain nombre d'équipements clients du réseau, ce profil comprenant leur état d'enregistrement, des données d'authentification et de localisation, et les services souscrits ;
- un ou plusieurs serveurs mandataires (aussi appelés serveurs « proxy »), désignés par « P-CSCF » (pour Proxy-Call Server Control Function), servant d'entité de raccordement entre le sous-système IMS et le réseau d'accès utilisé par les équipements clients, et qui sont donc aptes à retransmettre tous les messages de signalisation entre les équipements clients d'une part et les serveurs S-CSCF ou I-CSCF d'autre part. Ces messages de signalisation sont notamment des messages selon le protocole SIP, tel que défini par l'IETF (*Internet Engineering Task Force*) dans le document RFC 3261, lequel permet l'établissement, la modification et la terminaison de sessions multimédia dans un réseau utilisant le protocole IP.

Ainsi, l'équipement client s'enregistre auprès d'un tel sous-système IMS en envoyant un message « SIP REGISTER » contenant des informations d'identification vers un serveur P-CSCF, lequel relaie ce message vers un serveur I-CSCF qui, après vérification auprès d'un serveur HSS, retransmet ce message d'enregistrement vers le serveur S-CSCF approprié afin que ce dernier procède à l'enregistrement de l'équipement client.

Lorsque l'équipement client est connecté au réseau de communication via un réseau d'accès 2G ou 3G, l'équipement client doit s'authentifier auprès d'un commutateur MSC (pour Mobile Switching Center en anglais) du réseau de communication circuit afin de bénéficier des services de communication fournis par un tel réseau. Un commutateur MSC est un équipement d'un réseau de communication mobile circuit gérant entre autres le routage des appels et des SMS pour des équipements client, et l'interconnexion avec les autres réseaux de communication. Le commutateur MSC gère également l'établissement des communications pour ces équipements client, la mobilité et peut participer au basculement des équipements client lorsqu'ils changent de cellules radio au cours d'une communication (cas du « hand-over inter-MSC » : basculement entre commutateurs MSC).

Afin de simplifier la fourniture des services de communication à un équipement client pour un opérateur de réseau de communication, la norme 3GPP TS 23292 spécifie un mécanisme permettant à un commutateur MSC de s'enregistrer dans un sous-système IMS pour le compte d'un équipement client connecté à un réseau d'accès 2G ou 3G. Ainsi, même lorsque l'équipement client est connecté à un réseau fonctionnant en mode circuit, les services de communication sont fournis à l'équipement client jusqu'au commutateur MSC par le réseau de communication IMS. Selon ce mécanisme, lorsqu'un appel entrant destiné à l'équipement client est réceptionné par un serveur S-CSCF du sous-système IMS, Le type de connexion de l'équipement client (aussi appelé RAT pour Radio Access Type en anglais) est vérifié auprès d'une base de données HSS. Lorsque l'équipement client est connecté à un réseau d'accès 4G, l'appel est routé vers l'équipement client via le réseau d'accès 4G en mode paquet. Lorsque l'équipement client est connecté à un réseau d'accès 2G ou 3G, l'appel est routé en mode paquet vers le commutateur MSC qui s'est enregistré dans le sous-système IMS pour le compte de l'équipement client. Le commutateur MSC assure ensuite l'acheminement de l'appel en mode circuit vers l'équipement client. Un tel mécanisme permet de centraliser les services de communication dans un seul domaine PS quel que soit le réseau d'accès via lequel l'équipement client est connecté. Un tel mécanisme évite les problèmes de désynchronisation des données d'un service de communication entre les domaines CS et PS. en outre, ce mécanisme permet de limiter les cas de Circuit Fallback Switching (CSFB) dans lesquels l'équipement client doit basculer d'une connexion 4G à une connexion 2G/3G, par exemple lors de la réception ou l'émission d'un appel téléphonique ou d'un message SMS.

Document WO2010/055012 décrit un procédé dont un terminal accède à un système IMS au travers d'un serveur MSC. Le terminal peut accéder au MSC via un réseau CS ou PS, le MSC déterminant alors le type d'accès. Dans le cas d'un accès via un réseau CS, le MSC enregistre le terminal auprès du système IMS comme définit dans la norme TS23.292. Dans le cas où la requête d'accès est envoyée via le réseau PS, le MSC indique, avec la requête d'enregistrement, de ne pas considérer cet enregistrement pour le T-ADS, qui est la fonctionnalité dans l'IMS qui fait la sélection d'un réseau d'accès CS ou PS pour la distribution d'une session voix pour le terminal.

Cependant, selon ce mécanisme, le sous-système IMS comprend alors deux enregistrements relatifs à un même équipement client : un enregistrement relatif à l'équipement client connecté à un réseau d'accès 4G et un enregistrement relatif à l'enregistrement du commutateur MSC pour le compte de l'équipement client. Un tel mécanisme n'est donc pas optimal d'un point de vue des ressources du réseau de communication car il augmente le nombre de messages de signalisations relatifs à l'équipement client et la complexité de traitement des services à fournir à l'équipement client.

L'invention vise à améliorer l'état de la technique existant.

### Exposé de l'invention

Un des buts de l'invention est d'apporter des améliorations par rapport à l'état de la technique.

Elle propose à cet effet un procédé de traitement d'un message de signalisation relatif à un service de communication fourni à un équipement client par le réseau de communication selon la revendication 1.

Ainsi, le procédé de traitement selon l'invention permet à un commutateur mobile évolué du réseau de communication de transmettre les messages de signalisation relatifs à un équipement client à un serveur proxy d'un sous-système du réseau de communication, tel qu'un serveur P-CSCF d'un sous-système IMS, lorsque l'équipement client est connecté au réseau de communication via un réseau d'accès fonctionnant en mode paquet, tel qu'un réseau d'accès 4G. Ainsi, la gestion des messages de signalisation relatifs à l'équipement client est indépendante du réseau d'accès auquel l'équipement client est connecté. Grâce à l'invention, de tels messages transitent systématiquement par le commutateur mobile. Du point de vue du serveur P-CSCF, un tel serveur n'a plus à déterminer vers quel équipement (commutateur mobile ou équipement client) envoyer les messages de signalisation. La gestion du réseau de communication est ainsi simplifiée quel que soit le type de réseau d'accès via lequel l'équipement client accède au réseau de communication.

De plus, selon l'invention, les messages de signalisation, par exemple un message d'enregistrement ou de demande de communication, sont transmis à l'initiative de l'équipement client au serveur P-CSCF du sous-système IMS via le commutateur mobile. Le commutateur mobile sait alors distinguer si l'équipement client est connecté à un réseau d'accès fonctionnant en mode paquet ou en mode circuit.

De plus, grâce à l'invention, la gestion d'une situation de basculement de la connexion d'un équipement client d'un réseau d'accès fonctionnant en mode paquet vers un réseau d'accès fonctionnant en mode circuit est améliorée. En effet, l'invention propose une alternative à la fonction existante dite SRVCC (pour Single Radio Voice Call Continuity en anglais) définie par le standard 3GPP. En effet, le procédé d'attachement permet à un opérateur ne disposant que d'une couverture 4G de s'affranchir de la nécessité de conserver un serveur assurant la fonctionnalité SRVCC. La fonctionnalité SRVCC permet d'assurer la continuité d'une communication établie entre deux équipements clients ou entre un équipement client et un serveur, lorsqu'un équipement client bascule d'un réseau d'accès 4G vers un réseau d'accès 2G/3G. Si un opérateur choisit de ne déployer sur un territoire que des réseaux d'accès 4G ou de modifier ses réseaux d'accès de sorte à ne proposer que des réseaux d'accès 4G, un tel opérateur n'a plus alors besoin d'utiliser une fonctionnalité SRVCC. Cependant, afin de pouvoir continuer à fournir ses services de communication à ses abonnés lorsqu'ils sont en situation de « roaming out », c'est-à-dire lorsque les abonnés sont connectés à un réseau de communication différent de leur réseau nominal, un opérateur doit négocier des accords de « roaming out » avec d'autres opérateurs de réseau de communication. Or, l'opérateur ne maitrise pas les technologies déployées sur les réseaux de communication des autres opérateurs avec lesquels il a négocié des accords. Ainsi, lorsqu'un équipement client abonné auprès de l'opérateur en question est en situation de « roaming out » et qu'il bascule d'un réseau d'accès 4G vers un réseau d'accès 2G/3G au cours d'une communication, selon le modèle d'interconnexion des réseaux de communication nominal et visité, la fonctionnalité SRVCC est en général assurée par le réseau nominal de l'abonné.

L'opérateur du réseau nominal de l'abonné doit alors conserver un serveur adapté à assurer cette fonction SRVCC pour gérer les cas de « handover » 4G vers 3G/2G ou l'inverse de ses abonnés lorsqu'ils sont en situation de « roaming out », alors même qu'un tel opérateur a choisi de ne déployer que des réseaux d'accès 4G sur son réseau de communication.

Le procédé selon l'invention permet ainsi de s'affranchir de cette contrainte en proposant une alternative à la fonctionnalité SRVCC. Le procédé selon l'invention permet que lorsqu'un équipement client est en situation de « roaming out », c'est le réseau visité qui assure le basculement de l'équipement client d'un réseau d'accès 4G vers un réseau d'accès 2G/3G lorsque l'équipement client est en cours de communication.

Corrélativement, l'invention concerne un commutateur selon la revendication 5.

Un tel commutateur joue alors le rôle d'une passerelle entre le serveur proxy du sous-système du réseau de communication, tel qu'un serveur P-CSCF d'un sous-système IMS, et l'équipement client, tel qu'un terminal. Ainsi, selon l'invention, le commutateur assure le rôle d'un proxy pour les messages de signalisation émis et reçus par l'équipement client via le réseau de communication, lorsque l'équipement client est connecté au réseau de communication via un réseau d'accès fonctionnant en mode paquet, tel qu'un réseau d'accès 4G.

L'invention permet ainsi de simplifier le sous-système IMS puisqu'un seul enregistrement de l'équipement client est nécessaire au lieu de deux enregistrements dans l'art antérieur.

Les différents modes ou caractéristiques de réalisation mentionnés ci-après peuvent être ajoutés indépendamment ou en combinaison les uns avec les autres, aux caractéristiques du dispositif défini ci-dessus.

Selon un mode particulier de réalisation de l'invention, le module de communication du commutateur est adapté à recevoir et à transmettre un flux de données média relatif à une communication établie entre ledit équipement client et un autre équipement client, et le module de traitement est adapté à remplacer :
- dans un champ d'adresse source du flux de données média l'adresse de l'équipement client par l'adresse du dispositif de traitement lorsque le flux de données média est reçu en provenance de l'équipement client et destiné à l'autre équipement client,
- dans un champ d'adresse destinataire du flux de données média l'adresse du dispositif de traitement par l'adresse de l'équipement client lorsque le flux de données média est reçu en provenance de l'autre équipement client et destiné à l'équipement client.

Selon ce mode particulier de réalisation de l'invention, le commutateur est aussi adapté à relayer les flux de données média d'une communication établie entre l'équipement client et un autre équipement client. Ainsi, lors d'une situation de basculement de l'équipement client d'un réseau d'accès fonctionnant en mode paquet vers un réseau d'accès fonctionnant en mode circuit ou inversement, le basculement est mis en œuvre de manière plus rapide puisque les flux à basculer du réseau paquet vers le réseau circuit sont déjà ancrés au niveau du commutateur mobile.

Selon un autre mode particulier de réalisation de l'invention, le commutateur comprend en outre une mémoire stockant une adresse du serveur proxy d'un sous-système du réseau de communication.

Selon un autre mode particulier de réalisation de l'invention, le message de signalisation est un message selon le protocole SIP compris dans la liste suivante :
- un message d'enregistrement REGISTER de l'équipement client,
- un message de demande de communication INVITE émise par l'équipement client à destination d'un autre terminal,
- un message de souscription SUBSCRIBE à un service de notification d'événements, émis par l'équipement client à destination d'un serveur,
- un message de publication d'état PUBLISH émis par l'équipement client à destination d'un serveur,
- un message d'envoi de message MESSAGE émis par l'équipement client à destination d'un autre terminal ou serveur,
   - -un message de confirmation de réponse provisoire PRACK émis par l'équipement client à destination d'un autre terminal ou serveur,
- un message de transfert de session active REFER émis par l'équipement client à destination d'un autre terminal ou serveur,
- un message d'information INFO émis par l'équipement client à destination d'un autre terminal ou serveur,
- un message de demande de libération d'une session établie BYE émis par l'équipement client à destination d'un autre terminal ou serveur,
- un message de demande d'annulation de session en cours d'établissement CANCEL émis par l'équipement client à destination d'un autre terminal ou serveur,
- un message de demande de renégociation de session non encore établie UPDATE émis par l'équipement client à destination d'un autre terminal ou serveur,
- un message OPTIONS d'échanges de capacités de communication émise par l'équipement client à destination d'un autre terminal.

Dans un mode particulier de réalisation de l'invention, les différentes étapes du procédé de traitement, sont mises en œuvre par des instructions de programmes d'ordinateurs.

En conséquence, l'invention vise aussi un programme d'ordinateur selon la revendication 11.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1A présente un environnement de mise en œuvre de l'invention selon un mode particulier de réalisation de l'invention,
- la figure 1B présente un environnement de mise en œuvre de l'invention selon un autre mode particulier de réalisation de l'invention,
- la figure 2 présente des étapes des procédés de traitement d'un message de signalisation, d'envoi d'un message de signalisation et d'attachement d'un équipement client à un réseau d'accès selon un mode particulier de réalisation de l'invention,
- la figure 3 présente des étapes des procédés de traitement d'un message de signalisation, d'envoi d'un message de signalisation et d'attachement d'un équipement client à un réseau d'accès selon un autre mode particulier de réalisation de l'invention,
- la figure 4 illustre un dispositif de traitement d'un message de signalisation selon un mode particulier de réalisation de l'invention,
- la figure 5 illustre un dispositif d'attachement d'un équipement client à un réseau d'accès selon un mode particulier de réalisation de l'invention,
- la figure 6 illustre un dispositif d'envoi d'un message de signalisation selon un mode particulier de réalisation de l'invention.

### Description d'un mode particulier de réalisation de l'invention

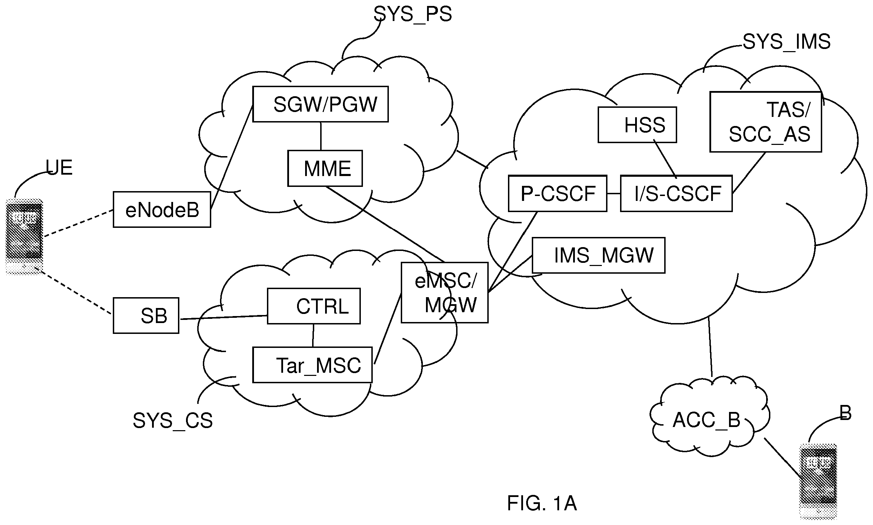

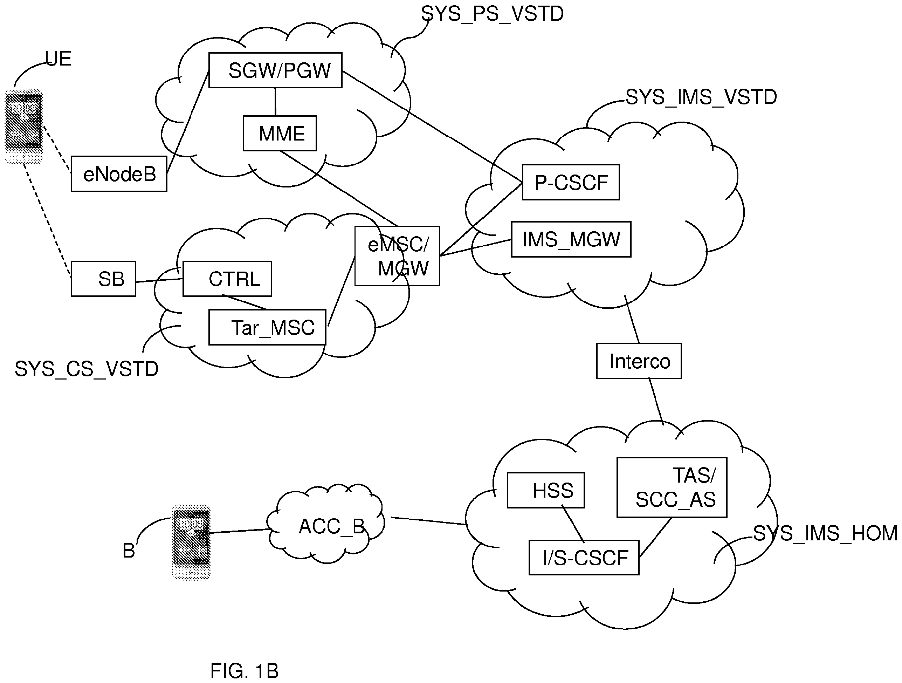

L'environnement illustré en figure 1A comprend :
- un équipement client UE adapté à établir des communications avec d'autres équipements client via un réseau fonctionnant en mode paquet, ou un réseau fonctionnant en mode circuit. Par exemple, un tel équipement client est un terminal de type téléphone mobile, smartphone (téléphone intelligent)...
- un réseau d'accès SYS_CS fonctionnant en mode circuit, par exemple de type 2G ou 3G. Le réseau d'accès SYS_CS est par exemple conforme à la norme GSM dans le cas d'un réseau 2G ou UMTS dans le cas d'un réseau 3G. Un tel réseau d'accès SYS_CS comprend classiquement au moins :
   ∘ une station de base SB avec laquelle l'équipement client UE communique pour avoir accès à un service de communication via le réseau d'accès SYS_CS, une telle station de base est de type BTS (Base Transceiver Station) dans le cas d'un réseau d'accès 2G (GSM pour Global System for Mobile communications) ou de type NodeB dans le cas d'un réseau d'accès 3G,
   ∘ un équipement de contrôle CTRL de type BSC ou RNC selon que le réseau d'accès SYS_CS est un réseau 3G ou 2G. Un tel équipement de contrôle CTRL contrôle la transmission radio des stations de base BTS ou NodeB. Il gère la répartition des ressources radio, le chiffrement des données avant l'envoi à l'équipement client UE, et la localisation de l'équipement client.
   ∘ un commutateur mobile Tar_MSC interfacé avec l'équipement de contrôle CTRL,
   ∘ un commutateur mobile évolué eMSC associé à une passerelle média MGW. Un tel commutateur mobile eMSC permet d'interfacer le réseau d'accès fonctionnant en mode circuit avec un sous-système IMS SYS_IMS d'un opérateur de réseau de communication. Le commutateur eMSC assure la traduction des messages de signalisation du service de communication de l'opérateur entre le protocole SIP du sous-système SYS_IMS et le protocole ISUP (ISDN Signalling User Part, ISDN pour Integrated Services Digital Network) du réseau d'accès SYS_CS et inversement. La passerelle MGW associée au commutateur eMSC assure l'encapsulation et dés-encapsulation selon le protocole RTP des flux de données média circuit (codec GSM, AMR, Wb-AMR, ...) émis ou reçus lors d'une communication établie par l'équipement client UE avec un autre équipement client ou un serveur.
- un réseau d'accès SYS_PS fonctionnant en mode paquet, conforme par exemple à la norme LTE définie par le consortium 3GPP. Un tel réseau d'accès SYS_PS comprend classiquement au moins :
   ∘ une station de base eNodeB jouant le rôle de passerelle entre l'équipement client UE connecté à une telle station de base et le cœur de réseau mobile de type EPC (pour Evolved Packet Core) du réseau d'accès SYS_PS,
   ∘ un équipement MME de gestion de la mobilité de l'équipement client UE. L'équipement MME prend notamment en charge l'authentification de l'équipement client UE et la procédure d'attachement de l'équipement client UE au réseau d'accès SYS_PS. L'équipement MME gère également la mobilité de l'équipement client UE.
   ∘ des passerelles SGW et PGW (pour Serving Gateway et PDN Gateway en anglais). De telles passerelles permettent d'une part l'ancrage de flux applicatifs (flux média et/ou flux de signalisation) au niveau de la passerelle SGW et d'autre part l'accès à des réseaux de données externes tels que Internet ou un sous-système IMS au niveau de la passerelle PGW.
- un sous-système SYS_IMS permettant à l'opérateur de l'équipement client UE de fournir un service de communication tel qu'un service de voix sur IP. Le sous-système SYS_IMS est basé sur une architecture IMS et comprend classiquement au moins :
   ∘ un serveur P-CSCF, qui peut intégrer une fonctionnalité ATCF (Access control Transfer Function) utilisée par le mécanisme eSRVCC, une telle fonctionnalité permet de gérer le basculement de l'équipement client UE d'un réseau d'accès 4G vers un réseau d'accès 3G ou 2G ou inversement en cours de communication. Une telle fonctionnalité permet lors d'un tel basculement, de limiter la coupure d'appel à une valeur inférieure à 300ms notamment lorsqu'un équipement client est en situation de « roaming out ».. La fonctionnalité ACTF permet également de piloter un équipement média ATGW intégré dans une passerelle média de type MGW (Média GateWay), IMS_MGW sur la figure 1. L'équipement média ATGW ancre les flux média RTP d'une session de communication permettant d'optimiser les ressources du réseau de communication lors d'un basculement de la session de communication dans le cas d'un « handover » 4G vers 3G/2G ou l'inverse.
   ∘ un serveur I/S-CSCF,
   ∘ une base de données client HSS,
   ∘ des serveurs d'applications TAS (Telephony Application Server) et SCC-AS (Service Centralization and Continuity Application Server). Le serveur d'application TAS est en charge de déclencher les services Originating (départ) et Terminating (arrivée) d'un équipement client UE lors de l'émission ou de la réception d'une communication depuis ou vers l'équipement client UE. Le serveur d'application SCC_AS permet d'une part de router une communication entrante à destination de l'équipement client UE en déterminant notamment si l'équipement client UE est connecté à un réseau d'accès fonctionnant en mode paquet ou fonctionnant en mode circuit. Le server d'application SCC_AS permet d'autre part de gérer le basculement (« handover » en anglais) de l'équipement client d'un réseau d'accès 4G vers un réseau d'accès 3G ou 2G et inversement via la fonctionnalité SRVCC.

Le sous-système SYS_IMS est interconnecté avec le réseau d'accès SYS_CS via un contrôleur MGCF (Media Gateway Controller Function, non représenté sur la figure) de passerelle MGW (IMS_MGW sur la figure 1).

Le sous-système SYS_IMS est également interconnecté avec le réseau d'accès SYS_PS.

Dans la figure 1A, les réseaux d'accès SYS_PS, SYS_CS et le sous-système SYS-IMS forme un réseau de communication d'un opérateur de réseau de communication HOM auprès duquel l'utilisateur de l'équipement client UE est abonné.

Le sous-système SYS_IMS peut également être interconnecté à d'autres sous-systèmes IMS d'autres opérateurs (non représentés) et/ou d'autres réseaux d'accès.

L'environnement de la figure 1A comprend également un équipement client B, tel qu'un terminal mobile, avec lequel l'équipement client UE est apte à communiquer. L'équipement client B est connecté à un réseau d'accès ACC_B. Un tel réseau d'accès est interconnecté au sous-système SYS_IMS via un point d'interconnexion (non représenté). Le réseau d'accès ACC_B peut ou non être déployé par l'opérateur HOM.

La figure 1B décrit un environnement de réalisation de l'invention selon un autre mode particulier de réalisation de l'invention.

L'environnement illustré par la figure 1B diffère de l'environnement illustré en figure 1A en ce que l'équipement client UE est connecté à un réseau de communication dit réseau visité. Un tel réseau visité est un réseau de communication d'un opérateur VSTD de réseau de communication différent de l'opérateur HOM auprès duquel l'utilisateur de l'équipement client UE est abonné. Le réseau de communication de l'opérateur auprès duquel l'utilisateur de l'équipement client UE est abonné est dit réseau nominal ou réseau « home ». Lorsqu'un équipement client UE est connecté à un réseau de communication visité, l'équipement client UE est dit en situation d'itinérance ou de « roaming out ».

Dans l'environnement de la figure 1B, le réseau d'accès fonctionnant en mode paquet SYS_PS et le réseau d'accès fonctionnant en mode circuit SYS_CS de la figure 1A sont des réseaux d'accès visité respectivement SYS_PS_VSTD et SYS_CS_VSTD comprenant des équipements similaires à ceux décrits en relation avec la figure 1A.

L'environnement de la figure 1B comprend également :
- un sous-système IMS visité (SYS_IMS_VSTD) d'un opérateur des réseaux d'accès visités SYS_PS_VSTD et SYS_CS_VSTD, un tel sous-système comprend au moins un serveur P-CSCF et une passerelle média IMS_MGW similaires à ceux décrits en relation avec la figure 1,
- un sous-système IMS (SYS_IMS_HOM) de l'opérateur auprès duquel l'utilisateur de l'équipement client UE est abonné. Un tel sous-système comprend au moins un serveur I/S-CSCF, une base de données clients HSS et des serveurs d'applications TAS et SCC_AS, similaires à ceux décrits en relation avec la figure 1.

Les réseaux d'accès SYS_PS_VSTD, SYS_CS_VSTD et le sous-système SYS_IMS_VSTD forment un réseau de communication de l'opérateur VSTD.

La figure 1B illustre un mode de fonctionnement d'interconnexion du réseau de communication visité et du réseau de communication nominal. Le sous-système visité SYS_IMS_VSTD et le sous-système nominal SYS_IMS_HOM sont interconnectés via des serveurs d'interconnexion Interco non détaillés ici. Selon le mode particulier de réalisation de l'invention décrit ici, les deux sous-systèmes sont interconnectés selon un modèle dit « Local Breakout ». Avec un tel mécanisme d'interconnexion, lorsque l'équipement client UE connecté à un réseau d'accès 4G souhaite accéder à ses services de communication, l'équipement client UE se connecte à un point d'accès eNodeB du réseau d'accès SYS_PS_VSTD, il s'attache à un tel réseau via une procédure d'attachement connue de l'homme du métier mise en œuvre par les équipements MME et SGW/PGW du réseau SYS_PS_VSTD. L'équipement client UE s'enregistre ensuite auprès du sous-système nominal SYS_IMS_HOM via le serveur P_CSCF du sous-système visité SYS_IMS_VSTD, puis le serveur I/S_CSCF du sous-système nominal SYS_IMS_HOM.

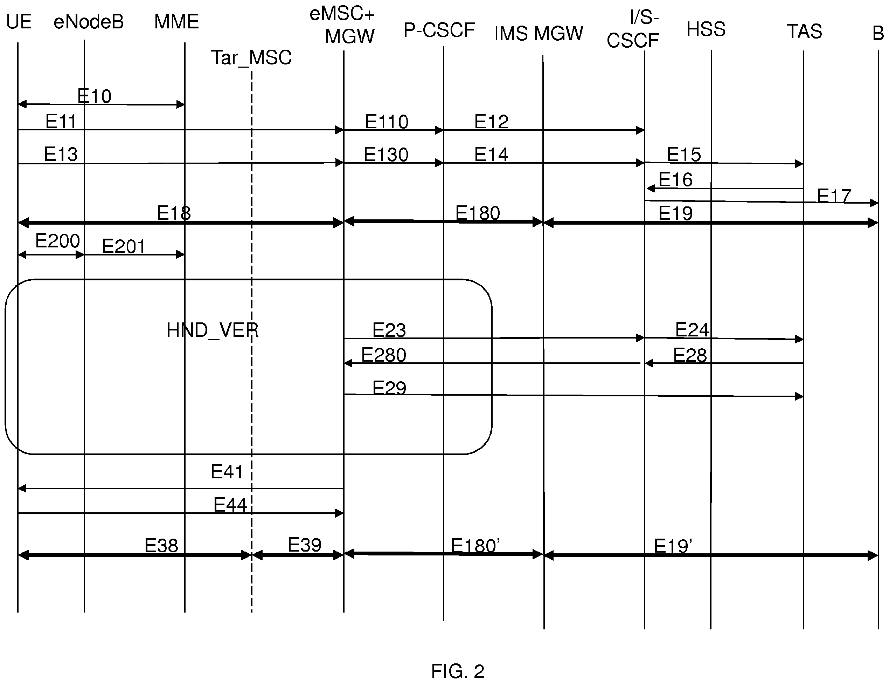

La figure 2 présente des étapes des procédés de traitement d'un message de signalisation, d'envoi d'un message de signalisation et d'attachement d'un équipement client à un réseau d'accès selon un mode particulier de réalisation de l'invention. Les étapes des procédés précédemment cités sont décrites ici en relation avec l'environnement de la figure 1A.

Lors d'une étape E10, l'équipement client UE s'attache au réseau d'accès SYS_PS en communiquant avec l'équipement MME. Lors de la procédure d'attachement, l'équipement MME obtient de la base de données HSS le profil de l'utilisateur de l'équipement client UE et notamment deux identifiants utiles en cas de « handover » :
- un identifiant STN-SR (Session Transfer Number - Single Radio) identifiant l'adresse du serveur SCC_AS et
- un identifiant C-MSISDN (Correlated MSISDN) permettant d'identifier une session SIP de l'équipement client UE.

Selon l'invention, l'identifiant STN-SR est par exemple positionné à NULL pour indiquer qu'un cas de « handover » de l'équipement client UE ne peut pas être traité par le serveur SCC_AS ou que le sous-système SYS_IMS ne dispose pas d'un tel serveur.

Lors de l'étape E10, l'équipement MME authentifie l'équipement client UE à partir de données d'authentification transmises par l'équipement client lors de sa requête d'attachement et de données reçues depuis la base de données HSS.

Au cours de l'étape E10, lorsque l'équipement MME a authentifié l'équipement client UE, l'équipement client UE obtient une adresse IP qui lui est attribuée par le serveur PGW. Une telle adresse IP est envoyée à l'équipement client UE par l'équipement MME selon le protocole PCO (Parameters Configuration Option). Selon l'invention, lors de l'étape E10, l'équipement client UE obtient également depuis l'équipement MME une adresse IP d'un commutateur eMSC. Une telle adresse d'un commutateur eMSC est obtenue par l'équipement MME depuis le serveur PGW qui attribue un commutateur eMSC à l'équipement client UE.

L'équipement client UE va ainsi ultérieurement transmettre et recevoir les messages de signalisation SIP au serveur P-CSCF par l'intermédiaire du commutateur eMSC.

L'adresse IP du P-CSCF a été préalablement configurée et mémorisée dans le commutateur eMSC par l'opérateur HOM du réseau de communication.

Lors d'une étape E11, l'équipement client UE s'enregistre auprès du sous-système SYS_IMS en envoyant un message SIP REGISTER au commutateur eMSC.

Lors d'une étape E110, le commutateur eMSC modifie l'adresse source du message SIP REGISTER reçu en remplaçant l'adresse de l'équipement client UE par l'adresse du commutateur eMSC. Le commutateur eMSC transmet ensuite, lors de l'étape E110, le message SIP REGISTER au serveur P_CSCF.

De manière connue, lors d'une étape E12 le serveur P_CSCF transmet le message d'enregistrement reçu au serveur I-CSCF qui le traite. Le serveur I_CSCF interroge la base de données HSS qui lui renvoie l'adresse du S_CSCF à utiliser pour l'enregistrement de l'équipement client UE (non représenté sur la figure pour plus de clarté). Le message d'enregistrement est alors transmis au serveur S_CSCF qui authentifie l'équipement client UE et applique la procédure de « Third Party Registration » vers le serveur TAS de sorte à informer le serveur TAS de l'enregistrement de l'équipement client UE.

En réponse (non représentés), le serveur I/S-CSCF, puis le serveur P-CSCF renvoie au commutateur eMSC un message SIP 2000k indiquant que l'équipement client UE a été enregistré. Le commutateur eMSC remplace dans un champ d'adresse destination l'adresse du commutateur eMSC par l'adresse de l'équipement client UE et transmet la réponse SIP 200 OK à l'équipement client UE.

L'équipement client UE est ainsi attaché à un réseau d'accès PS et enregistré dans le sous-système SYS_IMS. L'équipement client UE peut alors émettre et recevoir des communications VoIP via le réseau d'accès PS et le sous-système SYS_IMS.

Lors d'une étape E13, l'équipement client UE envoie une demande de communication vers un autre équipement client B sous la forme d'un message SIP INVITE. La demande de communication est transmise de l'équipement client UE au commutateur eMSC lors de l'étape E13. Lors d'une étape E130, le commutateur eMSC modifie l'adresse source du message SIP INVITE reçu en remplaçant l'adresse de l'équipement client UE par l'adresse du commutateur eMSC. Le commutateur eMSC transmet ensuite, lors de l'étape E130, le message SIP INVITE au serveur P_CSCF.

Lors d'une étape E14, le message SIP INVITE est transmis par le serveur P_CSCF vers le serveur S_CSCF. Lors d'une étape E15, le serveur S_CSCF transmet le message SIP INVITE au serveur TAS afin de déclencher les services Originating associé à l'équipement client UE. Lors d'une étape E16, le serveur TAS retransmet le message SIP INVITE au serveur S_CSCF. Lors d'une étape E17, le serveur S_CSCF transmet le message SIP INVITE à l'autre équipement client B.

La demande de communication est établie de manière similaire à l'établissement d'une communication selon le protocole SIP. Selon l'invention, les messages de signalisation SIP transitent par le commutateur eMSC. Du point de vue du sous-système SYS_IMS, le couple (eMSC,UE) est vu comme un seul équipement client UE.

Les messages de réponses provisoires SIP 183 In Progress, SIP 180 Ringing, SIP 2000K et d'acquittement ACK ne sont pas décrits ici pour plus de clarté. L'invention telle que décrite pour les messages SIP REGISTER et SIP INVITE s'applique également à de tels messages, ainsi qu'à tout type de messages de signalisation non cités ici.

La demande de communication est établie entre l'équipement client UE et l'équipement client B. Les flux média de la communication sont transmis selon le protocole RTP de manière bidirectionnelle :
- entre l'équipement client UE et la passerelle MGW associée au commutateur eMSC (communication E18),
- entre la passerelle MGW associée au commutateur eMSC et la passerelle IMS_MGW du sous-système SYS_IMS (communication E180),
- entre la passerelle IMS_MGW du sous-système SYS_IMS et l'équipement client B (communication E19).au cours de la communication, le commutateur eMSC joue alors le rôle de relai de flux RTP/RTCP. Le commutateur eMSC remplace :
   ∘ dans le champ d'adresse source d'un flux de données média l'adresse de l'équipement client UE par l'adresse du commutateur mobile eMSC lorsque le flux de données média est reçu en provenance de l'équipement client et destiné à l'autre équipement client B,
      - dans le champ d'adresse destinataire du flux de données média l'adresse du commutateur mobile eMSC par l'adresse de l'équipement client UE lorsque le flux de données média est reçu en provenance de l'autre équipement client B et destiné à l'équipement client UE.

On décrit par la suite, en relation avec la figure 2, un exemple de « handover » 4G vers 3G/2G de la communication en cours de l'équipement client UE.

Lors d'une étape E200, l'équipement client UE détecte en permanence les différents niveaux radio (4G, 3G, 2G) puis les transmet à l'antenne 4G eNodeB.

Dès que l'antenne eNodeB détecte, lors d'une étape E201, que le niveau radio 4G est insuffisant pour maintenir la communication en cours de l'équipement client UE et qu'une autre radio 3G/2G a un niveau suffisant pour maintenir la communication en cours de l'équipement client UE, l'antenne eNodeB demande, via une requête selon le protocole Diameter, à l'équipement MME d'activer une procédure de « handover ».

La procédure de « handover », indiquée HND_VER sur la figure 2, se déroule de manière connue. Le commutateur eMSC recherche le commutateur cible Tar_MSC auquel l'équipement client UE devra être attaché après le basculement. Un appel circuit est établit depuis le commutateur eMSC vers le commutateur MSC cible Tar_MSC. L'équipement client UE se connecte à une antenne 2G ou 3G et bascule sur le commutateur Tar_MCS en utilisant une procédure selon le standard CC (Call Control).

Suite au basculement 4G vers 3G/2G, le commutateur eMSC qui agissait en tant que proxy SIP et RTP/RTCP change alors de rôle pour agir en tant que passerelle MGCF et MGW. La fonction MGCF du commutateur eMSC permet de :
- traduire les messages de signalisation circuit en message de signalisation SIP et inversement,
- piloter la passerelle MGW pour que la passerelle MGW traduise les flux média circuit en flux de données RTP/RTCP et inversement.

Suite au basculement 4G vers 3G/2G de l'équipement client UE, lors d'une étape E41, le commutateur eMSC met fin à la session de communication SIP de l'équipement client UE, puisque la communication en cours de l'équipement client UE a basculé en mode circuit au départ de cet équipement client UE. Lors de l'étape E41, le commutateur eMSC envoie alors à l'équipement client UE via le réseau d'accès PS un message SIP BYE. Lors d'une étape E44, l'équipement client UE acquitte la fin de la session SIP en envoyant au commutateur eMSC un message SIP 200 OK.

Suite au basculement 4G vers 3G/2G, les flux média de la communication en cours entre l'équipement client UE et l'autre équipement client B sont transmis de manière bidirectionnelle :
- en technologie circuit, entre l'équipement client UE et le commutateur Tar_MSC (communication E38)

- en technologie circuit, entre le commutateur Tar_MSC et la passerelle MGW associée au commutateur eMSC (communication E39),
- selon le protocole RTP, entre la passerelle MGW associée au commutateur eMSC et la passerelle IMS_MGW du sous-système SYS_IMS (communication E180'),
- entre la passerelle IMS_MGW du sous-système SYS_IMS et l'équipement client B (communication E19').

Il est à noter que seuls les équipements des réseaux d'accès CS et PS ont été impactés par le « handover » de l'équipement client UE. Grâce à l'invention, le sous-système SYS_IMS n'a pas été impacté par le « handover ». Ainsi, l'invention permet d'optimiser l'utilisation des ressources du sous-système SYS_IMS. En particulier, l'invention permet d'éviter l'utilisation d'un serveur SCC_AS pour gérer le handover de l'équipement client.

Selon un mode particulier de réalisation de l'invention, le commutateur eMSC peut initier une procédure de renégociation jusqu'au serveur TAS de sorte à informer un tel serveur du changement de connectivité de l'équipement client UE, par exemple pour des aspects de facturation de l'utilisateur de l'équipement client UE ou de traçabilité. En effet, un tel serveur TAS peut être en charge de fournir des informations de facturation, telles que des tickets d'appels/connexion, à un serveur de facturation via le protocole Diameter ou via le protocole SFTP (Secure File Transfer Protocol) si le serveur TAS génère des enregistrements de type CDR (Call Detail Record).

Pour cela, lors d'une étape E23, le commutateur eMSC envoie au serveur S-CSCF un message SIP re-INVITE ou UPDATE. Un tel message est transmis par le serveur S-CSCF au serveur TAS lors d'une étape E24. Le serveur TAS répond au serveur S-CSCF lors d'une étape E28 par l'envoi d'un message SIP 2000K qui est retransmis au commutateur eMSC lors d'une étape E280. Lors d'une étape E29, le commutateur eMSC acquitte un tel message par l'envoi au serveur TAS, via le serveur S-CSCF, d'un message SIP ACK.

Lors d'une telle renégociation, les flux média ne sont pas impactés. Notamment, il n'y a pas de changement de codecs. Seules des informations de signalisation SIP sont transmises au serveur TAS.

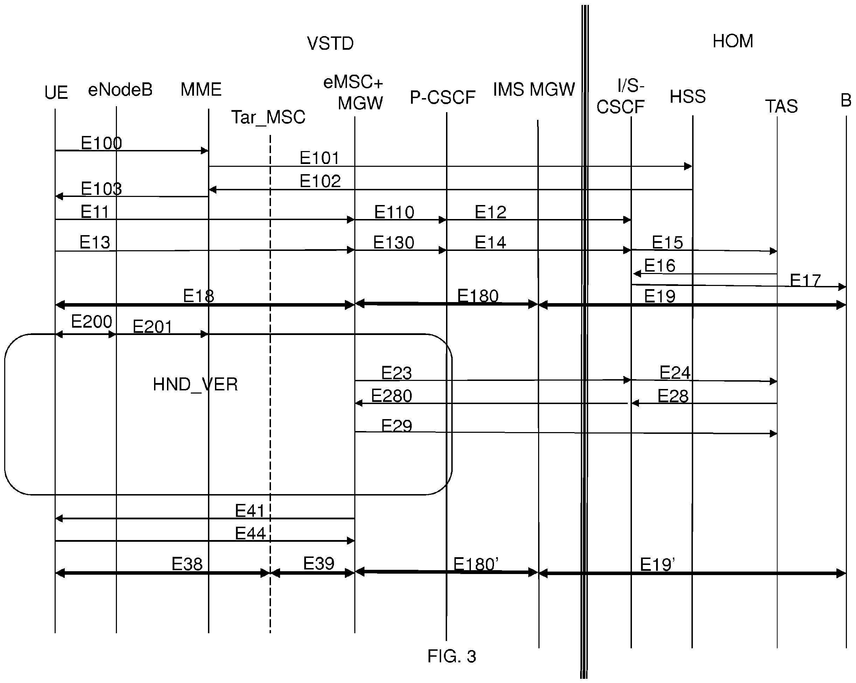

La figure 3 présente des étapes des procédés de traitement d'un message de signalisation, d'envoi d'un message de signalisation et d'attachement d'un équipement client à un réseau d'accès selon un autre mode particulier de réalisation de l'invention. Les étapes des procédés précédemment cités sont décrites ici en relation avec l'environnement de la figure 1B. Selon ce mode particulier de réalisation de l'invention, l'utilisateur de l'équipement client UE est abonné auprès d'un opérateur d'un réseau de communication HOM et l'équipement client UE est connecté à un réseau de communication visité VSTD.

Lors d'une étape E100, l'équipement client UE s'attache au réseau d'accès SYS_PS_VSTD en communiquant avec l'équipement MME d'un tel réseau d'accès. Lors de la procédure d'attachement, l'équipement MME détecte au cours d'une étape E101 que l'équipement client UE est en situation de « roaming out » (itinérance).

Lors de l'étape E101, l'équipement MME interroge la base de données HSS du sous-système nominal HOM afin d'obtenir le profil de l'utilisateur de l'équipement client UE.

Lors d'une étape E102, l'équipement MME obtient de la base de données HSS une information indiquant que le sous-système nominal SYS_IMS_HOM ne dispose pas de serveur SCC_AS gérant les situations de « handover » ou ne souhaite pas qu'un tel serveur soit utilisé. Par exemple, une telle information est obtenue par l'équipement MME à partir de l'identifiant STN-SR positionné à la valeur « NULL ».

Lors d'une étape E103, l'équipement client UE obtient depuis l'équipement MME et via le protocole PCO :
- l'adresse IP qui lui est attribuée par le serveur PGW et
- l'adresse IP d'un commutateur eMSC.

Ainsi, l'équipement client UE va transmettre et recevoir les messages de signalisation SIP vers et depuis ce commutateur eMSC, au lieu du serveur P-CSCF du sous-système visité SYS-IMS_VSTD. L'adresse IP du P-CSCF a été préalablement configurée et mémorisée dasn le commutateur eMSC par l'opérateur VSTD.

Le reste de la description de la figure 3 est identique à la description de la figure 2. Le serveur P-CSCF correspond au serveur P-CSCF du sous-système SYS_IMS_VSTD et les serveurs I/S-CSCF correspondent aux serveurs I/S-CSCF du sous-système SYS_IMS_HOM.

Avantageusement, lorsque l'équipement client UE est en situation de « roaming out » et qu'un basculement 4G vers 3G/2G ou 3G/2G vers 4G doit être mis en œuvre pour cet équipement client UE, l'invention permet qu'un tel basculement soit mis en œuvre uniquement au niveau du réseau d'accès de l'équipement client. Selon l'invention, un tel basculement ne fait ainsi pas intervenir le sous-système SYS_IMS_HOM.

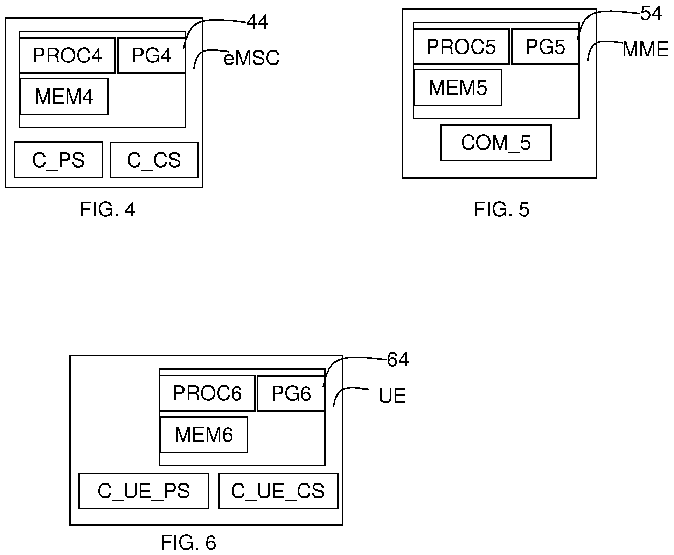

La figure 4 illustre un dispositif eMSC de traitement d'un message de signalisation selon un mode particulier de réalisation de l'invention.

Un tel dispositif comprend un module de traitement 44, comprenant notamment un module de stockage MEM4, par exemple une mémoire, et une unité de traitement PROC4, équipée par exemple d'un microprocesseur. L'unité de traitement PROC4 est pilotée par un programme d'ordinateur PG4 mettant en œuvre le procédé de traitement d'un message de signalisation tel que décrit en relation avec les figures 2 ou 3.

A l'initialisation, les instructions de code du programme d'ordinateur PG4 sont par exemple chargées en mémoire MEM4 avant d'être exécutées par le processeur de l'unité de traitement PROC4.

Le processeur de l'unité de traitement PROC4 met en œuvre les étapes du procédé de traitement d'un message de signalisation relatif à un service de communication fourni à un équipement client UE par le réseau de communication selon les instructions du programme d'ordinateur PG4.

Le processeur de l'unité de traitement PROC4 met notamment en œuvre :
- lorsque l'équipement client UE est connecté au réseau de communication via un réseau d'accès fonctionnant en mode circuit, une étape de traitement pour traduire un premier message de signalisation adapté à être acheminé via le réseau d'accès fonctionnant en mode circuit en un deuxième message de signalisation adapté à être acheminé via le réseau d'accès fonctionnant en mode paquet et inversement, lorsque l'équipement client est connecté au réseau de communication via un réseau d'accès fonctionnant en mode circuit,
- lorsque l'équipement client UE est connecté au réseau de communication via un réseau d'accès fonctionnant en mode paquet,
   - une étape de réception en provenance dudit équipement client ou d'un serveur du réseau de communication d'un troisième message de signalisation adapté à être acheminé via le réseau d'accès fonctionnant en mode paquet,
   - une étape de remplacement dans le troisième message de signalisation reçu d'une adresse source comprenant une adresse de l'équipement client par une adresse du commutateur mobile,
   - une étape d'envoi dudit troisième message de signalisation modifié à destination du serveur du réseau de communication ou dudit équipement client.

Le dispositif eMSC comprend notamment un module de communication C_PS adapté pour émettre et recevoir des messages de signalisations et des flux média depuis et vers un réseau fonctionnant en mode paquet.

Le dispositif eMSC comprend également un module de communication C_CS adapté pour émettre et recevoir des messages de signalisations et des flux média depuis et vers un réseau fonctionnant en mode circuit.

Le dispositif eMSC est par exemple compris dans un commutateur mobile évolué.

La figure 5 illustre un dispositif MME d'attachement d'un équipement client UE à un réseau d'accès selon un mode particulier de réalisation de l'invention.

Un tel dispositif comprend un module de traitement 54, comprenant notamment un module de stockage MEM5, par exemple une mémoire, et une unité de traitement PROC5, équipée par exemple d'un microprocesseur. L'unité de traitement PROC5 est pilotée par un programme d'ordinateur PG5 mettant en œuvre le procédé d'attachement d'un équipement client UE tel que décrit en relation avec les figures 2 ou 3.

A l'initialisation, les instructions de code du programme d'ordinateur PG5 sont par exemple chargées en mémoire MEM5 avant d'être exécutées par le processeur de l'unité de traitement PROC5.

Le processeur de l'unité de traitement PROC5 met en œuvre les étapes du procédé d'attachement d'un équipement client UE à un réseau d'accès fonctionnant en mode paquet, pour accéder à un réseau de communication, selon les instructions du programme d'ordinateur PG5.

Le processeur de l'unité de traitement PROC5 met notamment en œuvre :
- une étape de réception d'une requête d'attachement audit réseau d'accès, en provenance de l'équipement client,
- suite à une étape d'authentification de l'équipement client, une étape d'envoi audit équipement client d'une adresse basée sur le protocole Internet IP attribuée audit équipement client et d'une adresse d'un commutateur mobile du réseau de communication adapté à recevoir en provenance de l'équipement client au moins un message de signalisation relatif à un service de communication fourni audit équipement client par le réseau de communication.

Le dispositif MME comprend notamment un module de communication COM_5 adapté pour permettre au dispositif MME de communiquer avec d'autres équipements via un réseau de communication fonctionnant en mode paquet.

Le dispositif MME est par exemple compris dans un équipement de gestion de la mobilité MME d'un réseau EPC.

La figure 6 illustre un dispositif UE d'envoi d'un message de signalisation selon un mode particulier de réalisation de l'invention.

Un tel dispositif comprend un module de traitement 64, comprenant notamment un module de stockage MEM6, par exemple une mémoire, et une unité de traitement PROC6, équipée par exemple d'un microprocesseur. L'unité de traitement PROC6 est pilotée par un programme d'ordinateur PG6 mettant en œuvre le procédé d'envoi d'un message de signalisation tel que décrit en relation avec les figures 2 ou 3.

A l'initialisation, les instructions de code du programme d'ordinateur PG6 sont par exemple chargées en mémoire MEM6 avant d'être exécutées par le processeur de l'unité de traitement PROC6.

Le processeur de l'unité de traitement PROC6 met en œuvre les étapes du procédé d'envoi d'un message de signalisation relatif à un service de communication fourni à un équipement client UE par un réseau de communication, selon les instructions du programme d'ordinateur PG6.

Le processeur de l'unité de traitement PROC6 met notamment en œuvre, lorsque ledit message de signalisation est adapté à être acheminé via un réseau d'accès fonctionnant en mode paquet, et que ledit message de signalisation est destiné à un serveur proxy d'un sous-système du réseau de communication :
- lors d'une phase d'attachement de l'équipement client audit réseau d'accès fonctionnant en mode paquet pour accéder audit réseau de communication, une étape d'obtention d'une adresse d'un commutateur mobile du réseau de communication, en provenance d'un équipement de gestion de mobilité du réseau d'accès,
- après la phase d'attachement de l'équipement client audit réseau d'accès, une étape d'envoi du message de signalisation audit commutateur mobile.

Le dispositif UE comprend notamment un module de communication C_UE PS adapté pour émettre et recevoir des messages de signalisations et des flux média depuis et vers un réseau fonctionnant en mode paquet.

Le dispositif UE comprend également un module de communication C_UE_CS adapté pour émettre et recevoir des messages de signalisations et des flux média depuis et vers un réseau fonctionnant en mode circuit.

Le dispositif UE est par exemple compris dans un terminal. Un tel terminal peut être un téléphone mobile, une tablette, un ordinateur équipé d'une clé de connexion à un réseau de communication mobile. Plus généralement, le dispositif UE peut être tout terminal ou objet connecté adapté à communiquer via un réseau de communication mobile.

## Revendications

1. Procédé, mis en œuvre par un commutateur d'un réseau de communication, ledit commutateur étant adapté à transmettre, pour un acheminement dans un sous-système IMS fonctionnant en mode paquet dudit réseau de communication, des traductions en mode paquet de messages de signalisation en mode circuit relatifs à des services de communication IMS dudit sous-système IMS et reçus via un réseau mobile d'accès audit réseau de communication, fonctionnant en mode circuit, et inversement,
le procédé étant **caractérisé en ce qu'**il comprend:
- une réception d'au moins un premier message de signalisation en mode paquet relatif à un premier service de communication dudit sous-système IMS fourni à un équipement client connecté audit réseau de communication via un réseau mobile d'accès fonctionnant en mode paquet,
- une modification dudit premier message de signalisation, comprenant une étape de remplacement, dans laquelle:
lorsque ledit premier message de signalisation est reçu depuis l'équipement client via ledit réseau mobile d'accès en mode paquet, dans un champ d'adresse source du premier message de signalisation une adresse de l'équipement client est remplacée par une adresse du commutateur; et lorsque ledit premier message de signalisation est reçu depuis ledit sous-système IMS, dans un champ d'adresse destinataire, l'adresse du commutateur est remplacée par l'adresse de l'équipement client;
- un envoi dudit premier message de signalisation modifié

2. Procédé selon la revendication 1, dans lequel ledit réseau de communication est différent d'un réseau de l'opérateur auprès duquel l'équipement client est abonné.

3. Procédé selon la revendication 2, dans lequel ledit réseau de l'opérateur n'est pas adapté à gérer une situation de basculement de la connexion de l'équipement client d'un réseau mobile d'accès fonctionnant en mode paquet vers un réseau mobile d'accès fonctionnant en mode circuit ou inversement.

4. Procédé selon l'une quelconque des revendications 1 à 3, dans lequel le premier message de signalisation est un message selon le protocole SIP compris dans la liste suivante :
- un message d'enregistrement REGISTER de l'équipement client,
- un message de demande de communication INVITE émise par l'équipement client à destination d'un autre terminal,
- un message de souscription SUBSCRIBE a un service de notification d'événements, émis par l'équipement client à destination d'un serveur,
- un message de publication d'état PUBLISH émis par l'équipement client à destination d'un serveur,
- un message MESSAGE émis par l'équipement client à destination d'un autre terminal ou serveur,
- un message de confirmation de réponse provisoire PRACK émis par l'équipement client à destination d'un autre terminal ou serveur,
- un message de transfert de session active REFER émis par l'équipement client à destination d'un autre terminal ou serveur,
- un message d'information INFO émis par l'équipement client à destination d'un autre terminal ou serveur,
- un message de demande de libération d'une session établie BYE émis par l'équipement client à destination d'un autre terminal ou serveur,
- un message de demande d'annulation de session en cours d'établissement CANCEL émis par l'équipement client à destination d'un autre terminal ou serveur,
- un message de demande de renégociation de session non encore établie UPDATE émis par l'équipement client à destination d'un autre terminal ou serveur,
- un message OPTIONS d'échanges de capacités de communication émis par l'équipement client à destination d'un autre terminal.

5. Commutateur d'un réseau de communication, ledit commutateur étant adapté à :
- transmettre, pour un acheminement dans un sous-système IMS fonctionnant en mode paquet dudit réseau de communication, des traductions de messages de signalisation en mode circuit relatifs à des services de communication IMS dudit sous-système IMS et reçus via un réseau mobile d'accès audit réseau de communication, fonctionnant en mode circuit, et inversement,
ledit commutateur étant **caractérisé en ce qu'**il comprend :
- un module de communication apte à une réception d'au moins un premier message de signalisation en mode paquet relatif à un premier service de communication dudit sous-système IMS fourni à un équipement client connecté audit réseau de communication via un réseau mobile d'accès fonctionnant en mode paquet
- un module de traitement apte à :
une modification dudit premier message de signalisation, comprenant un remplacement dans lequel
• lorsque ledit premier message de signalisation est reçu depuis l'équipement client via ledit réseau mobile d'accès en mode paquet, dans un champ d'adresse source du premier message de signalisation une adresse de l'équipement client est remplacée par une adresse du commutateur,
• et lorsque ledit premier message de signalisation est reçu depuis ledit sous-système IMS, dans un champ d'adresse destinataire, l'adresse du commutateur est remplacée par l'adresse de l'équipement client.
un envoi dudit premier message de signalisation modifié

6. Commutateur selon la revendication 5, dans lequel :
- le module de communication est adapté à recevoir et à transmettre un flux de données média relatif à une communication établie entre ledit équipement client et un autre équipement client,
- le module de traitement est adapté à remplacer :
• dans un champ d'adresse source du flux de données media l'adresse de l'équipement client par l'adresse du commutateur lorsque le flux de données média est reçu en provenance de l'équipement client et destiné à l'autre équipement client,
• dans un champ d'adresse destinataire du flux de données media l'adresse du commutateur par l'adresse de l'équipement client lorsque le flux de données media est reçu en provenance de l'autre équipement client et destiné à l'équipement client.

7. Commutateur selon la revendication 5 ou la revendication 6, comprenant en outre une mémoire adaptée à stocker une adresse d'un serveur proxy d'un sous-système du réseau de communication.

8. Commutateur selon l'une des revendications 5 à 7, dans lequel ledit réseau de communication est différent d'un réseau de l'opérateur auprès duquel l'équipement client est abonné.

9. Commutateur selon la revendication 8, **caractérisé en ce que** ledit réseau de l'opérateur n'est pas adapté à gérer une situation de basculement de la connexion de l'équipement client d'un réseau mobile d'accès fonctionnant en mode paquet vers un réseau mobile d'accès fonctionnant en mode circuit ou inversement.

10. Commutateur selon l'une des revendications 5 à 9, dans lequel le premier message de signalisation est un message selon le protocole SIP compris dans la liste suivante :
- un message d'enregistrement REGISTER de l'équipement client,
- un message de demande de communication INVITE émise par l'équipement client à destination d'un autre terminal,
- un message de souscription SUBSCRIBE a un service de notification d'événements, émis par l'équipement client à destination d'un serveur,
- un message de publication d'état PUBLISH émis par l'équipement client à destination d'un serveur,
- un message MESSAGE émis par l'équipement client à destination d'un autre terminal ou serveur,
- un message de confirmation de réponse provisoire PRACK émis par l'équipement client à destination d'un autre terminal ou serveur,
- un message de transfert de session active REFER émis par l'équipement client à destination d'un autre terminal ou serveur,
- un message d'information INFO émis par l'équipement client à destination d'un autre terminal ou serveur,
- un message de demande de libération d'une session établie BYE émis par l'équipement client à destination d'un autre terminal ou serveur,
- un message de demande d'annulation de session en cours d'établissement CANCEL émis par l'équipement client à destination d'un autre terminal ou serveur,
- un message de demande de renégociation de session non encore établie UPDATE émis par l'équipement client à destination d'un autre terminal ou serveur,
- un message OPTIONS d'échanges de capacités de communication émis par l'équipement client à destination d'un autre terminal.

11. Programme d'ordinateur comportant des instructions de code de programme pour l'exécution d'un procédé selon l'une quelconque des revendications 1 à 4, lorsque le programme est exécuté par un processeur d'un commutateur selon l'une des revendications 5-10.

## Patentansprüche

1. Verfahren, das durch einen Schalter eines Kommunikationsnetzes durchgeführt wird, wobei der Schalter dazu geeignet ist, zur Weiterleitung in einem paketvermittelten funktionierenden IMS-Teilsystem des Kommunikationsnetzes Umsetzungen von leitungsvermittelten Signalisierungsnachrichten in Zusammenhang mit IMS-Kommunikationsdiensten des IMS-Teilsystems, die über ein leitungsvermitteltes mobiles Zugangsnetz zu dem Kommunikationsnetz empfangen wurden, in Paketvermittlung und umgekehrt zu übertragen, wobei das Verfahren **dadurch gekennzeichnet ist, dass** es umfasst:
- Empfangen mindestens einer ersten paketvermittelten Signalisierungsnachricht in Zusammenhang mit einem Kommunikationsdienst des IMS-Teilsystems, der einer Client-Vorrichtung bereitgestellt wird, die über ein paketvermitteltes mobiles Zugangsnetz mit dem Kommunikationsnetz verbunden ist,
- Ändern der ersten Signalisierungsnachricht, umfassend einen Schritt des Ersetzens, wobei:
wenn die erste Signalisierungsnachricht aus der Client-Vorrichtung über das paketvermittelte mobile Zugangsnetz empfangen wird, wird in einem Quelladressfeld der ersten Signalisierungsnachricht eine Adresse der Client-Vorrichtung durch eine Adresse des Schalters ersetzt;
und wenn die erste Signalisierungsnachricht aus dem IMS-Teilsystem empfangen wird, wird in einem Empfängeradressfeld die Adresse des Schalters durch die Adresse der Client-Vorrichtung ersetzt;
- Senden der geänderten ersten Signalisierungsnachricht.

2. Verfahren nach Anspruch 1, wobei das Kommunikationsnetz vom Betreibernetz verschieden ist, bei dem die Client-Vorrichtung Teilnehmer ist.

3. Verfahren nach Anspruch 2, wobei das Betreibernetz nicht dazu geeignet ist, eine Situation der Umschaltung der Verbindung der Client-Vorrichtung von einem paketvermittelten mobilen Zugangsnetz auf ein leitungsvermitteltes mobiles Zugangsnetz oder umgekehrt zu verwalten.

4. Verfahren nach einem der Ansprüche 1 bis 3, wobei die erste Signalisierungsnachricht eine Nachricht nach dem SIP-Protokoll ist, das in der folgenden Liste enthalten ist:
- eine Speichernachricht REGISTER der Client-Vorrichtung,
- eine Kommunikationsanforderungsnachricht INVITE, die von der Client-Vorrichtung an ein anderes Endgerät gesendet wird,
- eine Teilnehmeranmeldungsnachricht SUBSCRIBE für einen Ereignismeldungsdienst, die von der Client-Vorrichtung an einen Server gesendet wird,
- eine Zustandsveröffentlichungsnachricht PUBLISH, die von der Client-Vorrichtung an einen Server gesendet wird,
- eine Nachricht MESSAGE, die von der Client-Vorrichtung an ein anderes Endgerät oder einen Server gesendet wird,
- eine Nachricht zur Bestätigung der vorläufigen Antwort PRACK, die von der Client-Vorrichtung an ein anderes Endgerät oder einen Server gesendet wird,
- eine Nachricht zur Übertragung der aktiven Sitzung REFER, die von der Client-Vorrichtung an ein anderes Endgerät oder an einen Server gesendet wird,
- eine Informationsnachricht INFO, die von der Client-Vorrichtung an ein anderes Endgerät oder an einen Server gesendet wird,
- eine Nachricht zur Beendigungsanforderung für eine aufgebaute Sitzung BYE, die von der Client-Vorrichtung an ein anderes Endgerät oder an einen Server gesendet wird,
- eine Nachricht zur Annulierungsanforderung für eine Sitzung im Aufbau CANCEL, die von der Client-Vorrichtung an ein anderes Endgerät oder an einen Server gesendet wird,
- eine Nachricht zur Neuaushandlung einer noch nicht aufgebauten Sitzung UPDATE, die von der Client-Vorrichtung an ein anderes Endgerät oder an einen Server gesendet wird,
- eine Nachricht OPTIONS zum Austausch von Kommunikationskapazitäten, die von der Client-Vorrichtung an ein anderes Endgerät gesendet wird.

5. Schalter eines Kommunikationsnetzes, wobei der Schalter für Folgendes geeignet ist:
- zur Weiterleitung in einem paketvermittelten funktionierenden IMS-Teilsystem des Kommunikationsnetzes Übertragen von Umsetzungen von leitungsvermittelten Signalisierungsnachrichten in Zusammenhang mit IMS-Kommunikationsdiensten des IMS-Teilsystems, die über ein leitungsvermitteltes mobiles Zugangsnetz zu dem Kommunikationsnetz empfangen wurden, in Paketvermittlung und umgekehrt, wobei der Schalter **dadurch gekennzeichnet ist, dass** er umfasst:
- ein Kommunikationsmodul, das geeignet ist für einen Empfang mindestens einer ersten paketvermittelten Signalisierungsnachricht in Zusammenhang mit einem ersten Kommunikationsdienst des IMS-Teilsystems, der einer Client-Vorrichtung bereitgestellt wird, die über ein paketvermitteltes mobiles Zugangsnetz mit dem Kommunikationsnetz verbunden ist,
- ein Verarbeitungsmodul, das für Folgendes geeignet ist:
Ändern der ersten Signalisierungsnachricht, umfasst einen Ersatz, wobei
• wenn die erste Signalisierungsnachricht von der Client-Vorrichtung über das paketvermittelte mobile Zugangsnetzwerk empfangen wird, in einem Quelladressfeld der ersten Signalisierungsnachricht eine Adresse der Client-Vorrichtung durch eine Adresse des Schalters ersetzt wird;
• und wenn die erste Signalisierungsnachricht vom IMS-Teilsystem empfangen wird, die in einem Empfängeradressfeld die Adresse des Schalters durch die Adresse der Client-Vorrichtung ersetzt wird;
Senden der ersten geänderten Signalisierungsnachricht.

6. Schalter nach Anspruch 5, wobei:
- das Kommunikationsmodul dazu geeignet ist, einen Mediendatenfluss im Zusammenhang mit einer Kommunikation zu übertragen, die zwischen der Client-Vorrichtung und einer anderen Client-Vorrichtung aufgebaut wurde,
- das Verarbeitungsmodul dazu geeignet ist, Folgendes zu ersetzen:
• in einem Quelladressfeld des Mediendatenflusses die Adresse der Client-Vorrichtung durch die Adresse des Schalters, wenn der Mediendatenfluss aus der Client-Vorrichtung empfangen und für eine andere Client-Vorrichtung bestimmt ist,
• in einem Empfängeradressfeld des Mediendatenflusses die Adresse des Schalters durch die Adresse der Client-Vorrichtung, wenn der Mediendatenfluss aus der anderen Client-Vorrichtung empfangen und für die Client-Vorrichtung bestimmt ist.

7. Schalter nach Anspruch 5 oder Anspruch 6, außerdem umfassend einen Speicher, der dazu geeignet ist, eine Adresse eines Proxy-Servers eines Teilsystems des Kommunikationsnetzes zu speichern.

8. Schalter nach einem der Ansprüche 5 bis 7, wobei das Kommunikationsnetz von einem Betreibernetz verschieden ist, bei dem die Client-Vorrichtung Teilnehmer ist.

9. Schalter nach Anspruch 8, **dadurch gekennzeichnet, dass** das Betreibernetz nicht dazu geeignet ist, eine Situation der Umschaltung der Verbindung der Client-Vorrichtung eines paketvermittelten mobilen Zugangsnetzes auf ein leitungsvermitteltes mobiles Zugangsnetz oder umgekehrt zu verwalten.

10. Schalter nach einem der Ansprüche 5 bis 9, wobei die erste Signalisierungsnachricht ein SIP-Protokoll ist, das in der folgenden Liste enthalten ist:
- eine Speichernachricht REGISTER der Client-Vorrichtung,
- eine Kommunikationsanforderungsnachricht INVITE, die von der Client-Vorrichtung an ein anderes Endgerät gesendet wird,
- eine Teilnehmeranmeldungsnachricht SUBSCRIBE für einen Ereignismeldungsdienst, die von der Client-Vorrichtung an einen Server gesendet wird,
- eine Zustandsveröffentlichungsnachricht PUBLISH, die von der Client-Vorrichtung an einen Server gesendet wird,
- eine Nachricht MESSAGE, die von der Client-Vorrichtung an ein anderes Endgerät oder einen Server gesendet wird,
- eine Nachricht zur Bestätigung der vorläufigen Antwort PRACK, die von der Client-Vorrichtung an ein anderes Endgerät oder einen Server gesendet wird,
- eine Nachricht zur Übertragung der aktiven Sitzung REFER, die von der Client-Vorrichtung an ein anderes Endgerät oder an einen Server gesendet wird,
- eine Informationsnachricht INFO, die von der Client-Vorrichtung an ein anderes Endgerät oder an einen Server gesendet wird,
- eine Nachricht zur Beendigungsanforderung für eine aufgebaute Sitzung BYE, die von der Client-Vorrichtung an ein anderes Endgerät oder an einen Server gesendet wird,
- eine Nachricht zur Annulierungsanforderung für eine Sitzung im Aufbau CANCEL, die von der Client-Vorrichtung an ein anderes Endgerät oder an einen Server gesendet wird,
- eine Nachricht zur Neuaushandlung einer noch nicht aufgebauten Sitzung UPDATE, die von der Client-Vorrichtung an ein anderes Endgerät oder an einen Server gesendet wird,
- eine Nachricht OPTIONS zum Austausch von Kommunikationskapazitäten, die von der Client-Vorrichtung an ein anderes Endgerät gesendet wird.

11. Computerprogramm, umfassend Programmcodeanweisungen zur Ausführung eines Verfahrens nach einem der Ansprüche 1 bis 4, wenn das Programm durch einen Prozessor eines Schalters nach einem der Ansprüche 5 bis 10 ausgeführt wird.

## Claims

1. Method, implemented by a switch of a communication network, said switch being designed to transmit, for routing in an IMS subsystem, operating in packet-switched mode, of said communication network, translations into packet-switched mode of signalling messages in circuit-switched mode relating to IMS communication services of said IMS subsystem and received via a mobile access network for accessing said communication network, operating in circuit-switched mode, and vice versa, the method being **characterized in that** it comprises:
- receiving at least one first signalling message in packet-switched mode relating to a first communication service of said IMS subsystem provided to a client equipment connected to said communication network via a mobile access network operating in packet-switched mode,
- modifying said first signalling message, comprising a replacement step, in which:
when said first signalling message is received from the client equipment via said mobile access network in packet-switched mode, in a source address field of the first signalling message, an address of the client equipment is replaced with an address of the switch;
and when said first signalling message is received from said IMS subsystem, in a recipient address field, the address of the switch is replaced with the address of the client equipment;
- sending said modified first signalling message.

2. Method according to Claim 1, wherein said communication network is different from a network of the operator with which the client equipment is subscribed.

3. Method according to Claim 2, wherein said network of the operator is not designed to manage a situation of handing over the connection of the client equipment from a mobile access network operating in packet-switched mode to a mobile access network operating in circuit-switched mode or vice versa.

4. Method according to any one of Claims 1 to 3, wherein the first signalling message is a message in accordance with the SIP protocol contained in the following list:
- a registration message REGISTER to register the client equipment,
- a communication request message INVITE transmitted by the client equipment to another terminal,
- a subscription message SUBSCRIBE to subscribe to an events notification service, transmitted by the client equipment to a server,
- a status publication message PUBLISH transmitted by the client equipment to a server,
- a message MESSAGE transmitted by the client equipment to another terminal or server,
- a provisional response confirmation message PRACK transmitted by the client equipment to another terminal or server,
- an active session transfer message REFER transmitted by the client equipment to another terminal or server,
- an information message INFO transmitted by the client equipment to another terminal or server,
- a message BYE requesting the release of an established session, transmitted by the client equipment to another terminal or server,
- a message CANCEL requesting cancellation of a session currently being established, transmitted by the client equipment to another terminal or server,
- a message UPDATE requesting renegotiation of a session that has not yet been established, transmitted by the client equipment to another terminal or server,
- a communication capability exchange message OPTIONS transmitted by the client equipment to another terminal.

5. Switch of a communication network, said switch being designed to:
- transmit, for routing in an IMS subsystem, operating in packet-switched mode, of said communication network, translations of signalling messages in circuit-switched mode relating to IMS communication services of said IMS subsystem and received via a mobile access network for accessing said communication network, operating in circuit-switched mode, and vice versa,
said switch being **characterized in that** it comprises:
- a communication module able to receive at least one first signalling message in packet-switched mode relating to a first communication service of said IMS subsystem provided to a client equipment connected to said communication network via a mobile access network operating in packet-switched mode,
- a processing module able to:
modify said first signalling message, comprising a replacement, in which:
• when said first signalling message is received from the client equipment via said mobile access network in packet-switched mode, in a source address field of the first signalling message, an address of the client equipment is replaced with an address of the switch,
• and when said first signalling message is received from said IMS subsystem, in a recipient address field, the address of the switch is replaced with the address of the client equipment,
send said modified first signalling message.

6. Switch according to Claim 5, wherein:
- the communication module is designed to receive and to transmit a media data flow relating to a communication established between said client equipment and another client equipment,
- the processing module is designed to replace:
• in a source address field of the media data flow, the address of the client equipment with the address of the switch when the media data flow is received from the client equipment and destined for the other client equipment,
• in a recipient address field of the media data flow, the address of the switch with the address of the client equipment when the media data flow is received from the other client equipment and destined for the client equipment.

7. Switch according to Claim 5 or Claim 6, furthermore comprising a memory designed to store an address of a proxy server of a subsystem of the communication network.

8. Switch according to one of Claims 5 to 7, wherein said communication network is different from a network of the operator to which the client equipment is subscribed.

9. Switch according to Claim 8, **characterized in that** said network of the operator is not designed to manage a situation of handing over the connection of the client equipment from a mobile access network operating in packet-switched mode to a mobile access network operating in circuit-switched mode or vice versa.

10. Switch according to one of Claims 5 to 9, wherein the first signalling message is a message in accordance with the SIP protocol contained in the following list:
- a registration message REGISTER to register the client equipment,
- a communication request message INVITE transmitted by the client equipment to another terminal,
- a subscription message SUBSCRIBE to subscribe to an events notification service, transmitted by the client equipment to a server,
- a status publication message PUBLISH transmitted by the client equipment to a server,
- a message MESSAGE transmitted by the client equipment to another terminal or server,
- a provisional response confirmation message PRACK transmitted by the client equipment to another terminal or server,
- an active session transfer message REFER transmitted by the client equipment to another terminal or server,
- an information message INFO transmitted by the client equipment to another terminal or server,
- a message BYE requesting the release of an established session, transmitted by the client equipment to another terminal or server,
- a message CANCEL requesting cancellation of a session currently being established, transmitted by the client equipment to another terminal or server,
- a message UPDATE requesting renegotiation of a session that has not yet been established, transmitted by the client equipment to another terminal or server,
- a communication capability exchange message OPTIONS transmitted by the client equipment to another terminal.

11. Computer program comprising program code instructions for executing a method according to any one of Claims 1 to 4 when the program is executed by a processor of a switch according to one of Claims 5 to 10.
